Europäisches Patentamt

European Patent Office

Office européen des brevets

(11) Veröffentlichungsnummer: **0 344 391**
**A1**

## (12) EUROPÄISCHE PATENTANMELDUNG

(21) Anmeldenummer: **88810351.2**

(22) Anmeldetag: **31.05.88**

(51) Int. Cl.⁴: **B23Q 5/40**

(43) Veröffentlichungstag der Anmeldung:
**06.12.89 Patentblatt 89/49**

(84) Benannte Vertragsstaaten:
**AT BE CH DE ES FR GB IT LI NL SE**

(71) Anmelder: **Beer, Alfred**
**Langackerstrasse 33**
**CH-6330 Cham(CH)**

(72) Erfinder: **Beer, Alfred**
**Langackerstrasse 33**
**CH-6330 Cham(CH)**

(74) Vertreter: **Utiger, Heinrich, Prof. Dr. phil.**
**David Hessweg 16 Postfach 145**
**CH-8060 Zürich(CH)**

(54) Vorrichtung zum Verschieben eines Arbeitsgerätes.

㉗ Die Vorrichtung besteht aus einer Kugelumlaufspindel (2), die auf einer Spindelauflage nicht mehr drehbar und fest verankert aufliegt. Die Kugelumlaufspindel (2) ist mit einer mobilen Kugelumlaufmutter (1) ver sehen, an der ein Mitnehmerflansch (4) fixiert ist. Am Mitnehmerflansch ist ein Arbeitsgerät angebracht. Durch das Antriebsrad (8) wird die Kugelumlaufmutter (1) über den Treibkeil (9) in Drehung versetzt, wobei sich die Kugelumlaufmutter mit dem Mitnehmerflansch und dem Arbeitsgerät verschiebt.

EP 0 344 391 A1

## Vorrichtung zum Verschieben eines Arbeitsgerätes.

Vorliegende Erfindung betrifft eine Vorrichtung zum Verschieben eines Arbeitsgerätes.

Es ist bekannt, dass bis anhin z.B. das Nähen einer Ballonhülle, das Schneiden von Stoffen usw. in der Art un Weise erfolgte, dass das zu bearbeitende Material auf einem Arbeitstisch unter dem Bearbeitungskopf durchgezogen werden musste. Das hierbei verwendete Arbeitsgerät bestand u.a. aus einem Arbeitstisch, der auf einer Spindel fixiert war, wobei die Spindel mittels Motorantrieb in Drehung gebracht wurde zwecks Verschiebung einer auf dem Tisch fixierten und nicht mobilen Mutter von einem Punkt A zu einem Punkt B

Die Nachteile einer solchen Vorrichtung müssen darin erblickt werden, dass die Länge eines Arbeitstisches nicht beliebig lang gewählt werden kann, weil die zu verwendende Spindel bei einem längeren Arbeitstisch auch länger sein muss. Eine zu lange und daher zu schwe re Spindel benötigt eine zu grosse Antriebskraft und der Drehmomentverlust ist dabei zu gross. Zudem ist zu bemerken, dass eine zu lange Spindel durch die Drehung in Schwingung gerät, was zu einem Bruch derselben führen kann. Aus den aufgeführten Gründen muss daher die Spindel in gewissen Abmessungen gehalten werden, wobei die Fahrwege, wie auch die Fahrgeschwindigkeit klein gehalten werden mussten. Längere Fahrwege und höhere Fahrgeschwindigkeiten wären heutzutage von grossem Vorteil, indem eine raschere Bearbeitung in viel kürzerer Zeit vorgenommen werden könnte.

Erfindungsgemäss können die oben erwähnten Nachteile dadurch eliminiert werden indem man die Spindel fest fixiert und die Mutter aber mobil gestaltet.

Die Erfindung betrifft somit eine Vorrichtung zum Verschieben eines Arbeitsgerätes, bestehend aus einer auf einer Spindelauflage liegenden Kugelumlaufspindel, auf der eine Kugelumlaufmutter mit an ihr befestigten Mitnehmerflansch fixiert ist, sowie eines Antriebes, wobei die Kugelumlaufspindel nicht mehr drehbar und fest verankert auf der Spindelauflage liegt und wobei die Kugelumlaufmutter durch ein Antriebsrad über den Treibkeil in Drehung versetzt wird, was eine Verschiebung des Mitnehmerflansches mit daran fixiertem Arbeitsgerät zur Folge hat.

Die vorliegende Erfindung ist anhand einer Zeichnung beispielsweise dargestellt und wird näher erläutert.

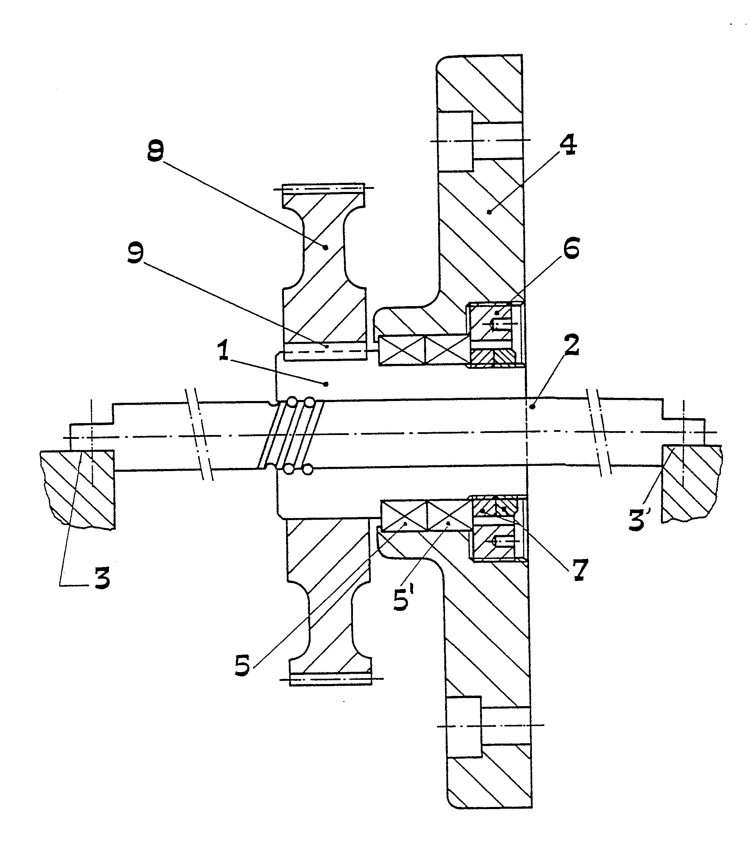

Die einzige Figur zeigt einen Längsschnitt der erfindungsgemässen Vorrichtung und ist in verkleinertem Massstab dargestellt.

Gemäss der beiliegenden Zeichnung besteht die erfindungsgemässe Vorrichtung aus einer Kugelumlaufspindel 2, die auf der Spindelauflage 3 und 3' nicht mehr drehbar und fest verankert aufliegt. Die Kugelumlaufspindel ist mit einer mobilen Kugelumlaufmutter 1 versehen, auf der ein Mitnehmerflansch 4 fixiert ist. Zwecks Aufhebung des genauigkeitsabhängigen Längsspills ist eine Wellenmutter 7 vorgesehen, mit der die Schrägkugellager 5 und 5' auf die Kugelumlaufmutter 1 gespannt werden. Durch den Lagerspannring 6 werden die Schrägkugellager 5 und 5' in den Mitnehmerflansch 4 gespannt. Durch das Antriebsrad 8 wird die Kugelumlaufmutter 1 über den Treibkeil 9 in Drehung versetzt. Mit der Verschiebung der Kugelumlaufmutter 1 verschiebt sich auch das in der Zeichnung nicht eingezeichnete Arbeitsgerät über den Mitnehmerflansch 4, das am Arbeitsgeräteträger befestigt ist.

Das Arbeitsgerät kann eine Tischplatte, ein Schneid- , Bohr- , Schweiss- oder Nähkopf sein, so dass die Vorrichtung zum Schneiden und Nähen von Stoffen Verwendung findet, wie auch zum Bolzenschweissen, zum Bohren und zum Gewindeschneiden verwendet werden.

Gegenüber den bis anhin bekannten Vorrichtungen mit fixierter und unbeweglicher Mutter, aber mit einer mobilen Spindel weist die Erfindung u.a. folgende Vorteile auf:
kleinere Antriebskraft bei längerem Fahrweg und grösserer Fahrgeschwindigkeit. Die Vorrichtung ist kostengünstiger und bedeutet eine echte Bereicherung der Technik.

## Ansprüche

Vorrichtung zum Verschieben eines Arbeitsgerätes, bestehend aus einer auf einer Spindelauflage liegenden Kugelumlaufspindel, auf der eine Kugelumlaufmutter mit an ihr befestigten Mitnehmerflansch fixiert ist, sowie eines Antriebes,
dadurch gekennzeichnet,
dass die Kugelumlaufspindel (2) nicht mehr drehbar und fest verankert auf der Spindelauflage (3,3') liegt und das die Kugelumlaufmutter (1) durch ein Antriebsrad (8) über den Treibkeil (9) in Drehung versetzt wird, was eine Verschiebung des Mitnehmerflansches (4) mit daran fixiertem Arbeitsgerät zur Folge hat.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 425 244 (VEB WERKZEUGMASCHINENKOMBINAT) * Das ganze Dokument * --- | 1 | B 23 Q 5/40 |
| X | DE-A-3 248 004 (TERAMACHI) * Seite 19, Zeile 27 - Seite 21, Zeile 1; Figuren * --- | 1 | |
| X | FR-A-2 393 656 (V.W.) * Das ganze Dokument * --- | 1 | |
| A | WERKSTATTTECHNIK, ZEITSCHRIFT FÜR INDUSTRIELLE FERTIGUNG, Band 73, Nr. 3, März 1983, Seiten 169-173, Würzburg, DE; G. STUTE et al.: "Spindasyn, ein neuer elektromechanischer Linearantrieb für NC-Werkzeugmaschinen" ----- | 1 | |

**RECHERCHIERTE SACHGEBIETE (Int. Cl.4)**

B 23 Q

Der vorliegende Recherchenbericht wurde für alle Patentansprüche erstellt

| Recherchenort | Abschlußdatum der Recherche | Prüfer |
|---|---|---|
| DEN HAAG | 13-12-1988 | RIS M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument